# FASCICULE DE BREVET EUROPEEN

(11) **EP 3 131 072 B1**
(45) Date de publication et mention de la délivrance du brevet: **03.10.2018**
(21) Numéro de dépôt: 16183080.7
(22) Date de dépôt: 05.08.2016
(51) Int. Cl.: G06Q 20/10, G06Q 20/20, G07G 1/00, G06K 7/08, G06K 19/04

(54) **TERMINAL DE PAIEMENT ÉLECTRONIQUE ET DISPOSITIF DE COUPLAGE**
ELEKTRONISCHES ZAHLUNGSTERMINAL UND ANSCHLUSSVORRICHTUNG
ELECTRONIC PAYMENT TERMINAL AND COUPLING DEVICE

(30) Priorité: 11.08.2015 FR 1557675
(43) Date de publication de la demande: 15.02.2017
(73) Titulaire: Ingenico Group, 75015 Paris (FR)
(72) Inventeur: DEMIR, Herman, 26000 Valence (FR); JANOT, Cyril, 21000 Dijon (FR)
(74) Mandataire: Vidon Brevets & Stratégie

(56) Documents cités:
- US-A1- 2005 236 480
- US-A1- 2011 084 131
- US-B1- 9 092 766

## Description

### 1 DOMAINE DE L'INVENTION

La présente invention se rapporte au domaine des terminaux de paiement électronique et plus particulièrement aux terminaux proposant une fonctionnalité de paiement par carte à piste magnétique, via le passage de la carte à piste magnétique dans un lecteur spécifique, ainsi que des fonctionnalités de communication radio (GSM, GPRS, WIFI...).

Plus précisément, l'invention se rapporte à l'optimisation des performances rayonnées de la ou des antennes intégrées aux terminaux pour la mise en oeuvre de ces fonctionnalités de communication radio.

### 2 SOLUTIONS DE L'ART ANTERIEUR

Les terminaux de paiement électronique actuels proposent classiquement plusieurs moyens d'effectuer un paiement chez un commerçant :
- le paiement « sans contact » (ou « contactless » en anglais), par présentation, devant un lecteur sans contact, d'une carte de paiement présentant également la fonctionnalité de paiement sans contact ;
- le paiement par insertion, dans un lecteur spécifique, d'une carte à puce puis la saisie, par le porteur de la carte à puce, de son code confidentiel via le clavier ou l'écran du terminal de paiement électronique ;
- le paiement par lecture de la piste magnétique d'une carte, lors du passage de la carte dans un lecteur spécifique. Cette fonction est communément appelée fonction « swipe », et est illustrée par exemple en figure la, où une carte de paiement 11 peut être glissée dans un passage 101 du terminal de paiement électronique 10 de façon à ce que sa piste magnétique puisse être lue par le terminal de paiement électronique.

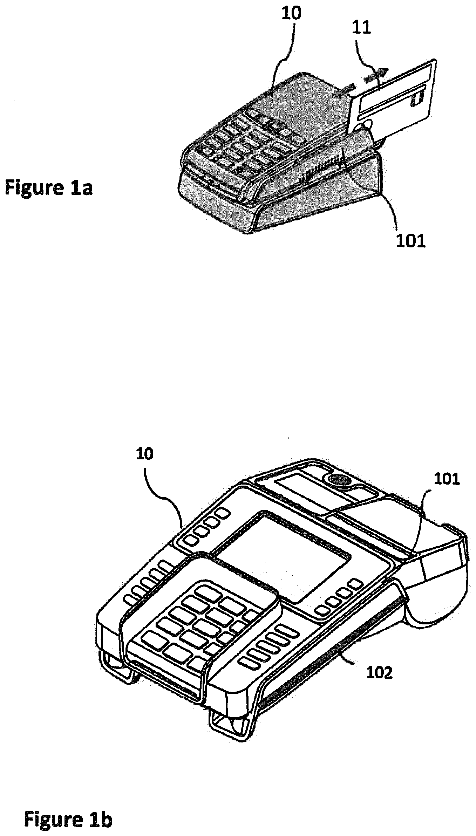

Les passages répétés des cartes pour le paiement par lecture de piste magnétique entrainent une usure du plastique au niveau du passage des cartes dans le terminal de paiement électronique. C'est pourquoi la plupart des terminaux de paiement électronique actuels présentent un passage de carte renforcé, par exemple par ajout d'une pièce métallique présentant la forme d'un rail intégré au fond du passage de carte. Un tel rail 102 est illustré par exemple en figure 1b et présente une solution peu couteuse contre l'usure du passage 101 du terminal de paiement électronique 10 due à l'utilisation de la fonction « swipe ». De plus, ce rail « fond de swipe » permet également un positionnement précis de la carte de paiement à piste magnétique, lors de son passage, de manière à assurer un paiement rapide et sans erreur de lecture de la piste magnétique.

Néanmoins, d'un point de vue radiofréquence, et plus particulièrement d'un point de vue des performances rayonnées des antennes, cette pièce métallique est une contrainte. Or, la plupart des terminaux de paiement électronique actuels présentent effectivement des fonctions « radio », permettant par exemple des communications via les technologies GSM, GPRS, WIFI et/ou 3G, afin de permettre un lien de communication sans fil entre un serveur bancaire (par exemple) et le terminal de paiement électronique.

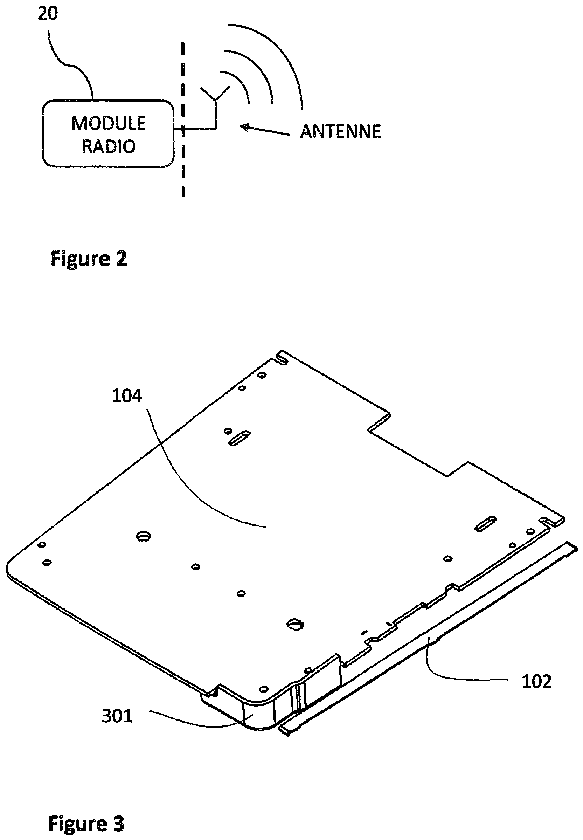

Schématiquement, la fonction « radio » dans un terminal de paiement électronique peut se décomposer de la manière suivante, comme illustré en figure 2 :
- un module radio 20, correspondant à la partie relative au « conduit », intégré au circuit imprimé du terminal de paiement électronique ;
- un élément rayonnant ou antenne, correspondant à la partie relative au « rayonné », qui est fortement dépendant de l'environnement et notamment des éléments métalliques pouvant se trouver à proximité. En effet, une antenne est un dispositif réversible d'émission-réception du domaine de l'électromagnétisme, qui permet l'optimisation de la propagation d'un signal provenant du module radio dans un média (air, vide, eau, etc...). On parle alors d'adaptation d'impédance, dont les propriétés et performances sont très dépendantes de l'environnement.

Ainsi, les performances rayonnées (efficacité, gain, directivité) d'une fonction radio dans un terminal de paiement électronique dépendent donc essentiellement de l'élément rayonnant constitué par l'antenne. Il est donc nécessaire et indispensable de disposer d'un environnement le plus favorable possible pour la mise en oeuvre de cette antenne.

Or, certaines contraintes fonctionnelles perturbent l'environnement d'une antenne, comme par exemple le rail métallique de renforcement du fond de passage de carte magnétique, qui est très impactant sur l'adaptation de l'antenne, donc sur les performances rayonnées du terminal de paiement électronique.

Les techniques actuelles de développement de l'architecture d'un terminal de paiement électronique sont donc basées sur l'obtention d'un compromis entre les fonctionnalités (radio et fonction « swipe) et les performances, aboutissant nécessairement à des solutions non optimales.

Il existe donc un besoin pour une nouvelle technique de mise en oeuvre des moyens de communication radio d'un terminal de paiement électronique présentant également la fonction « swipe », permettant des performances optimales, à moindre coût.

### 3 RESUME DE L'INVENTION

L'invention propose une solution nouvelle qui ne présente pas l'ensemble de ces inconvénients de l'art antérieur, sous la forme d'un terminal de paiement électronique présentant un lecteur de carte de paiement à piste magnétique comprenant un passage de carte renforcé dans sa partie inférieure par un rail métallique et un module radio intégré à au moins un circuit imprimé du terminal de paiement électronique, et comprenant un dispositif de couplage connecté au module radio via une partie métallique assemblée à une partie plastique, le dispositif de couplage étant adapté pour former, avec le rail métallique, une antenne associée au module radio.

Ainsi, l'invention propose, selon ses différents modes de réalisation, une solution nouvelle et inventive de la conception d'un terminal de paiement électronique présentant à la fois une fonction radio et une fonction « swipe », en intégrant le rail de renforcement du passage de la carte à piste magnétique de la fonction « swipe » dans la partie rayonnée de la fonction radio du terminal de paiement électronique.

Pour ce faire, l'invention, selon ses différents modes de réalisation, met en oeuvre un dispositif dit de « couplage », relié au module radio intégré au circuit imprimé du terminal de paiement électronique (pour assurer la fonction radio) via une partie métallique (pour le couplage) « portée » par une partie plastique qui permet de contrôler le positionnement de la partie métallique par rapport au rail métallique. Ainsi, le dispositif de couplage et le rail métallique constituent l'antenne associée au module radio pour assurer la fonction radio du terminal de paiement électronique.

De cette manière, l'invention, selon ses différents modes de réalisation, permet d'intégrer le rail métallique dans la conception de l'antenne de la fonction radio du terminal de paiement électronique, au lieu de considérer ce rail métallique comme une contrainte pour l'architecture de la fonction radio du terminal de paiement électronique, comme dans l'art antérieur. En effet, la partie métallique du dispositif de couplage est directement connectée au module radio du circuit imprimé du terminal de paiement électronique, de façon à assurer la liaison entre la partie « antenne » (constituée par cette partie métallique et le rail métallique) et la partie « conduit » de la fonction radio.

Les parties plastique et métallique du dispositif de couplage sont assemblées/solidarisées entre elles, la partie plastique servant de support à la partie métallique et permettant de disposer la partie métallique à la distance adéquate du rail métallique pour obtenir les meilleures performances d'antenne. Par exemple, ces deux pièces du dispositif de couplage sont fixées par « bouterollage », technique couramment utilisée pour créer une liaison mécanique entre plusieurs pièces par la déformation partiale d'une pièce en plastique et notamment pour assembler des matériaux différents comme métal et plastique.

Selon un aspect particulier, la partie métallique du dispositif de couplage présente une forme adaptée pour assurer un couplage entre le rail métallique et le dispositif de couplage.

Ainsi, selon ce mode de réalisation de l'invention, la forme de la partie métallique du dispositif de couplage permet de définir l'adaptation du couplage entre le rail métallique et le dispositif de couplage lui-même. La forme de la partie métallique du dispositif de couplage dépend donc de différents paramètres liés à d'autres éléments du terminal de paiement électronique, comme par exemple les dimensions du rail métallique lui-même, les différentes fréquences des technologies radio concernées...

On entend par la « forme » de cette partie métallique non seulement sa forme géométrique mais également toutes ses dimensions (largeur, longueur, épaisseur) qui permettent d'obtenir des performances d'antenne optimales en tenant compte du rail métallique.

Par exemple, la forme adaptée de la partie métallique tient compte d'au moins un paramètre appartenant au groupe comprenant :
- Au moins une dimension du rail métallique ;
- Au moins une caractéristique de fonctionnement du module radio.

Selon une caractéristique particulière, la partie plastique est assemblée au circuit imprimé et présente une forme et un positionnement par rapport au rail métallique adaptés pour respecter un écart prédéterminé entre la partie métallique et le rail métallique.

Ainsi, selon ce mode de réalisation de l'invention, la forme et le positionnement de la partie plastique du dispositif de couplage permettent d'optimiser le couplage en contrôlant de manière précise le positionnement de la partie métallique par rapport au rail métallique. En effet, le couplage est très fortement dépendant de l'écart entre le dispositif de couplage (et plus particulière sa partie métallique) et le rail métallique, et c'est grâce à la pièce plastique (fixée au circuit imprimé) supportant la pièce métallique que le meilleur écart peut être respecté de manière précise. La pièce plastique contribue ainsi à l'adaptation du couplage entre le rail métallique et le dispositif de couplage.

L'invention concerne également un dispositif de couplage comprenant au moins une partie métallique assemblée à une partie plastique, adapté pour être connecté, via la partie métallique, à un module radio intégré à au moins un circuit imprimé d'un terminal de paiement électronique comprenant un passage de carte renforcé dans sa partie inférieure par un rail métallique, et également adapté pour former, avec le rail métallique, une antenne associée au module radio.

### 4 LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- Les figures la et 1b, déjà commentées en relation avec l'art antérieur, illustrent des exemples de terminaux de paiement selon l'état de la technique ;
- La figure 2, déjà commentée en relation avec l'art antérieur, présente un schéma de la fonction radio dans un terminal de paiement électronique ;
- La figure 3 présente un exemple d'une partie d'un terminal de paiement électronique selon un mode de réalisation de l'invention ;
- Les figures 4a à 4c présentent respectivement une vue de face, de profil et de dessus d'un exemple de dispositif de couplage intégré à un terminal de paiement électronique, selon un mode de réalisation de l'invention.

### 5 DESCRIPTION DETAILLEE DE L'INVENTION

### 5.1 Principe général

Le principe de l'invention consiste à intégrer, dans la partie rayonnée d'un terminal de paiement, les contraintes fonctionnelles de la présence d'un rail de renfort du passage de carte magnétique, encore appelé rail « fond de swipe » (également noté ci-après rail métallique). La solution de l'invention permet donc d'améliorer les performances rayonnées du terminal de paiement électronique par cette intégration de la contrainte initiale du rail métallique, contrairement aux solutions de l'art antérieur recherchant un compromis entre performances et fonctionnalités.

Les inventeurs de la présente demande de brevet sont partis du constat que les rails « fond de swipe » correspondent la plupart du temps à des tiges métalliques d'une certaine longueur qui s'avère correspondre à des longueurs physiques caractéristiques des technologies radio concernées.

En effet, les technologies radio concernées (gsm/gprs/3g) fonctionnent dans le domaine spectral proche du gigahertz (de 824mhz a 2100mhz), ce qui correspond à une longueur d'onde de l'ordre de 30 à 12 cm, c'est-à-dire à des demi longueurs d'ondes de l'ordre de 15 à 6 cm. Or, un rail « fond de swipe » présente classiquement une longueur de l'ordre de ces demi longueurs d'ondes, c'est-à-dire approximativement 10 à 15 cm. Le rail « fond de swipe » peut donc être considéré comme un élément rayonnant aux fréquences radio

Les inventeurs ont donc cherché une solution technique consistant à faire entrer en résonnance le rail « fond de swipe » avec la partie relative au conduit de la fonction radio.

Pour ce faire, l'invention, selon ses différents modes de réalisation, met en oeuvre un couplage entre un dispositif (dit « de couplage ») directement connecté au module radio du terminal de paiement électronique et le rail métallique, de façon à intégrer ce rail métallique dans la conception de l'antenne d'émission-réception permettant d'assurer la ou les fonctions radio du terminal de paiement électronique, améliorant ainsi les performances rayonnées sans compromis entre la fonctionnalité de lecture de piste magnétique d'une carte et les performances de l'antenne radio.

### 5.2 Description d'un mode de réalisation

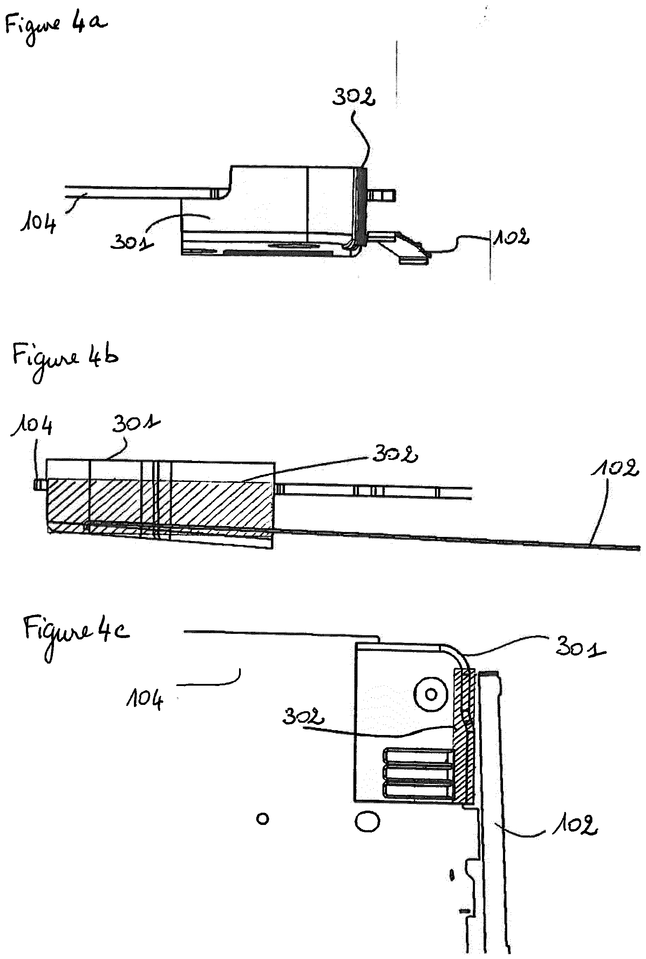

On présente maintenant, en relation avec les figures 3 et 4a à 4c, un exemple de dispositif de couplage mis en oeuvre dans un terminal de paiement électronique.

La figure 3 illustre tout d'abord, selon un mode de réalisation particulier de l'invention, la partie plastique 301 du dispositif de couplage, ainsi que la carte électronique (ou le circuit imprimé) 104 du terminal de paiement électronique et le rail métallique 102.

Sur cet exemple, la partie plastique 301 du dispositif de couplage présente une forme particulière, destinée à permettre l'obtention de performances optimales de l'antenne formée par la partie métallique (non illustrée) du dispositif de couplage et le rail métallique 102, tout en étant adaptée à d'éventuelles autres contraintes internes de la structure du terminal de paiement électronique.

Ainsi, la partie plastique 301 formant un support pour la partie métallique du dispositif de couplage, elle permet de respecter précisément l'écart souhaité entre la partie métallique du dispositif de couplage et le rail métallique, afin d'obtenir le meilleur couplage pour l'antenne.

Il est à noter que cet écart, ainsi que la forme de la partie métallique du dispositif de couplage, sont prédéterminés par exemple en fonction des fréquences des technologies radio données pour la fonction radio du terminal de paiement électronique et en fonction de certaines caractéristiques du rail métallique du terminal de paiement électronique.

On décrit maintenant plus en détails les interactions entre les différentes pièces du dispositif de couplage et les éléments du terminal de paiement électronique, en relation avec les figures 4a à 4c.

Ces figures illustrent un mode de réalisation particulier de l'invention, respectivement en vue de face, de profil et de dessus. Les formes (et dimensions) des pièces plastique 301 et métallique 302 du dispositif de couplage ont été choisies à titre d'exemple uniquement, pour permettre d'illustrer un exemple de positionnement du dispositif de couplage dans le terminal de paiement électronique, notamment par rapport au rail métallique 102 et au circuit imprimé 104. L'homme du métier peut aisément se référer à ses connaissances pour déterminer les formes les plus adaptées pour ces deux parties du dispositif de couplage, en fonction notamment des performances rayonnées souhaitées pour la fonction radio et des dimensions du rail métallique.

Ainsi, sur la figure 4a (vue de face), la partie métallique 302 du dispositif de couplage est représentée sous la forme d'un rectangle noir d'épaisseur choisie pour permettre un couplage optimal avec le rail métallique, sachant que la partie plastique 301 permet, grâce à sa forme et son positionnement sur le circuit imprimé 104 du terminal de paiement électronique, un positionnement optimal de la partie métallique par rapport au rail métallique 102.

Par exemple, la partie métallique 302 correspond à une pièce de tôle pliée assez fine. En effet, l'épaisseur de la tôle pour la pièce métallique n'est pas critique aux fréquences souhaitées d'utilisation (effet de peau connu de l'homme du métier). A titre d'exemple, à 800MHz (fréquence basse), l'effet de peau donne une épaisseur critique minimale d'environ 2.5µm, donc une pièce de tôle pliée de 200µm d'épaisseur peut convenir par exemple.

Sur la figure 4b (vue de profil), la partie métallique 302 est représentée en hachuré, comme sur la figure 4c (vue de dessus), sur laquelle l'écart entre cette partie métallique 302 et le rail métallique 102 est visible.

Ces figures permettent donc également d'illustrer l'une des fonctions principales de la pièce plastique 301 du dispositif de couplage qui consiste à former un support pour la pièce métallique 302 de façon à assurer son positionnement précis par rapport au rail métallique 102. En effet, comme déjà indiqué ci-dessus, le couplage entre les deux éléments métalliques (pièce métallique 302 et rail métallique 102) de l'antenne est très dépendant de l'écart entre ces deux éléments.

Par ailleurs, différentes techniques de solidarisation/assemblage peuvent être mises en oeuvre pour assurer la fonction de support de la pièce métallique 302 par la pièce plastique 301, comme par bouterollage. Toute autre technique permettant d'assembler les pièces plastique et métallique du dispositif de couplage peut être utilisée.

De même, la partie plastique 301 est assemblée au circuit imprimé 104 du terminal de paiement électronique par clipsage par exemple. Là encore, toute autre technique d'assemblage permettant de solidariser la partie plastique 301 et le circuit imprimé 104 pouvant être mise en oeuvre.

Enfin, la pièce métallique 302 est connectée au module radio 20 intégré au circuit imprimé 104, de façon connue et non détaillée dans la présente demande, pour permettre le fonctionnement de l'antenne ainsi obtenue par couplage de cette partie métallique et du rail métallique (présent dans le terminal de paiement électronique pour renforcer le passage de carte magnétique).

L'intégration du dispositif de couplage formée d'une partie métallique 302, reliée au module radio 20 du terminal de paiement électronique, et d'une partie plastique 301 formant un support pour la pièce plastique et étant elle-même assemblée au circuit imprimé du terminal de paiement électronique, permet donc, selon les différents modes de réalisation de l'invention, d'optimiser les performances rayonnées de la fonction radio du terminal de paiement électronique sans dégrader les autres fonctions de ce dernier.

### 5.3 Autres caractéristiques et avantages

Une autre problématique est également résolue par la présente solution, concernant l'impact des décharges électrostatiques sur le terminal de paiement électronique, susceptibles notamment de détériorer le module radio.

En effet, les modules radio ne sont généralement pas prévus pour supporter des décharges supérieures à 2, voir 6 kV, ce qui est généralement insuffisant au vu du fonctionnement classique d'un terminal de paiement électronique. Pour pallier cet inconvénient, les antennes, étant conductrices, sont généralement rendues non accessibles ou sont protégées contre toute attaque électrostatique (via l'utilisation de radome par exemple), selon différentes techniques de l'art antérieur.

Or, la solution selon les différents modes de réalisation de l'invention consistant à intégrer le rail métallique dans l'implémentation de la fonction radio du terminal de paiement électronique, et plus particulièrement dans l'antenne, permet, via la couplage effectué entre le dispositif de couplage et le rail métallique, d'isoler le module radio du terminal de paiement électronique et donc de le protéger contre des attaques électrostatiques, malgré l'accessibilité de ce rail métallique et son exposition aux décharges électrostatiques.

La solution selon les différents modes de réalisation de l'invention permet donc d'améliorer les performances rayonnées sans compromis entre la fonctionnalité de lecture de piste magnétique d'une carte, les performances de l'antenne radio et l'immunité vis à vis des attaques électrostatiques.

## Revendications

1. Terminal de paiement électronique (10) présentant un lecteur de carte de paiement à piste magnétique comprenant un passage de carte (101) renforcé dans sa partie inférieure par un rail métallique (102) et un module radio (20) intégré à au moins un circuit imprimé (104) dudit terminal de paiement électronique (10),
**caractérisé en ce qu'**il comprend un dispositif de couplage connecté audit module radio (20) via une partie métallique (302) assemblée à une partie plastique (301), ledit dispositif de couplage étant adapté pour former, avec ledit rail métallique (102), une antenne associée audit module radio (20).

2. Terminal de paiement électronique selon la revendication 1, **caractérisé en ce que** ladite partie métallique (302) dudit dispositif de couplage présente une forme adaptée pour assurer un couplage entre ledit rail métallique (102) et ledit dispositif de couplage.

3. Terminal de paiement électronique selon la revendication 2, **caractérisé en ce que** ladite forme adaptée de ladite partie métallique (302) tient compte d'au moins un paramètre appartenant au groupe comprenant :
• Au moins une dimension dudit rail métallique (102) ;
• Au moins une caractéristique de fonctionnement dudit module radio (20).

4. Terminal de paiement électronique selon la revendication 1, **caractérisé en ce que** ladite partie plastique (301) est assemblée audit circuit imprimé (104) et présente une forme et un positionnement par rapport audit rail métallique (102) adaptés pour respecter un écart prédéterminé entre ladite partie métallique (302) et ledit rail métallique (102).

5. Dispositif de couplage **caractérisé en ce qu'**il comprend au moins une partie métallique (302) assemblée à une partie plastique (301) et **en ce qu'**il est adapté pour être connecté, via ladite partie métallique (302), à un module radio (20) intégré à au moins un circuit imprimé (104) d'un terminal de paiement électronique comprenant un passage de carte (101) renforcé dans sa partie inférieure par un rail métallique (102), ledit dispositif de couplage étant adapté pour former, avec ledit rail métallique (102), une antenne associée audit module radio (20).

## Patentansprüche

1. Elektronisches Zahlungsterminal (10) mit einem Zahlkartenleser mit einem Magnetstreifen, umfassend einen Kartendurchzug (101), der in seinem unteren Teil durch eine Metallschiene (102) verstärkt ist, und ein Funkmodul (20), das in mindestens einer gedruckten Schaltung (104) des elektronischen Zahlungsterminals (10) integriert ist,
**dadurch gekennzeichnet, dass** dieses eine Kopplungsvorrichtung umfasst, die mit dem Funkmodul (20) über einen Metallteil (302) verbunden ist, der mit einem Kunststoffteil (301) assembliert ist, wobei die Kupplungsvorrichtung geeignet ist, mit der Metallschiene (102) eine Antenne zu bilden, die mit dem Funkmodul (20) assoziiert ist.

2. Elektronisches Zahlungsterminal nach Anspruch 1,
**dadurch gekennzeichnet, dass** der Metallteil (302) der Kupplungsvorrichtung eine Form aufweist, die geeignet ist, eine Kopplung zwischen der Metallschiene (102) und der Kupplungsvorrichtung sicherzustellen.

3. Elektronisches Zahlungsterminal nach Anspruch 2,
**dadurch gekennzeichnet, dass** die angepasste Form des Metallteils (302) mindestens einen Parameter berücksichtigt, der zur Gruppe gehört umfassend:
- mindestens eine Abmessung der Metallschiene (102);
- mindestens eine Betriebscharakteristik des Funkmoduls (20).

4. Elektronisches Zahlungsterminal nach Anspruch 1,
**dadurch gekennzeichnet, dass** der Kunststoffteil (301) mit der gedruckten Schaltung (104) assembliert ist und eine Form und eine Positionierung in Bezug auf die Metallschiene (102) aufweist, die geeignet sind, einen vorherbestimmten Abstand zwischen dem Metallteil (302) und der Metallschiene (102) einzuhalten.

5. Kopplungsvorrichtung,
**dadurch gekennzeichnet, dass** diese mindestens einen Metallteil (302) umfasst, der mit einem Kunststoffteil (301) assembliert ist, und dadurch, dass diese geeignet ist, über den Metallteil (302) mit einem Funkmodul (20) verbunden zu sein, das in mindestens einer gedruckten Schaltung (104) eines elektronischen Zahlungsterminals integriert ist, umfassend einen Kartendurchzug (101), der in seinem unteren Teil durch eine Metallschiene (102) verstärkt ist, wobei die Kopplungsvorrichtung geeignet ist, mit der Metallschiene (102) eine Antenne zu bilden, die mit dem Funkmodul (20) assoziiert ist.

## Claims

1. Electronic payment terminal (10) having a magnetic stripe payment card reader comprising a card passage (101) reinforced in its lower part by a metal rail (102) and a radio module (20) integrated with at least one printed circuit board (104) of said electronic payment terminal (10),
**characterized in that** it comprises a coupling device connected to said radio module (20) via a metal part (302) assembled with a plastic part (301), said coupling device being adapted to forming, with said metal rail (102), an antenna associated with said radio module (20).

2. Electronic payment terminal according to claim 1, **characterized in that** said metal part (302) of said coupling device has a shape adapted to providing for coupling between said metal rail (102) and said coupling device.

3. Electronic payment terminal according to claim 2, **characterized in** said adapted shape of said metal part (302) takes account of at least one parameter belonging to the group comprising:
• at least one dimension of said metal rail (102);
• at least one operating characteristic of said radio module (20).

4. Electronic payment terminal according to claim 1, **characterized in that** said plastic part (301) is assembled with said printed circuit board (104) and has a shape and a position relative to said metal rail (102) that are adapted to maintaining a predetermined distance between said metal part (302) and said metal rail (102).

5. Coupling device **characterized in that** it comprises at least one metal part (302) assembled with a plastic part (301) and **in that** it is adapted to being connected via said metal part (302) to a radio module (20) integrated into at least one printed circuit board (104) of an electronic payment terminal comprising a card passage (101) reinforced in its lower part by a metal rail (102), said coupling device being adapted to forming, with said metal rail (102), an antenna associated with said radio module (20).
